Europäisches Patentamt

European Patent Office

Office européen des brevets

(11) Publication number: **0 185 728**
**B1**

# (12) EUROPEAN PATENT SPECIFICATION

(45) Date of publication of patent specification: **20.01.88**

(51) Int. Cl.⁴: **B 61 G 9/20,** B 60 D 1/14

(21) Application number: **85903090.0**

(22) Date of filing: **12.06.85**

(86) International application number:
**PCT/SE85/00247**

(87) International publication number:
**WO 86/00053 03.01.86 Gazette 86/01**

## (54) AN ARRANGEMENT IN PIVOTING BEARINGS FOR DRAWGEARS.

(30) Priority: **12.06.84 SE 8403142**

(43) Date of publication of application:
**02.07.86 Bulletin 86/27**

(45) Publication of the grant of the patent:
**20.01.88 Bulletin 88/03**

(84) Designated Contracting States:
**AT BE CH DE FR GB IT LI NL SE**

(56) References cited:
**DE-B-1 038 592**
**DE-C- 739 988**
**US-A-2 250 425**

(73) Proprietor: **DELLNER COUPLERS B.V.**
**P.O.B. 71808**
**NL-1008 EA Amsterdam (NL)**

(72) Inventor: **SVEDBO, Anders**
**Box 713**
**S-783 02 Stora Skedevi (SE)**

(74) Representative: **Nordén, Ake et al**
**AWAPATENT AB Box 7402**
**S-103 91 Stockholm (SE)**

Courier Press, Leamington Spa, England.

## Description

The present invention relates to an arrangement in a pivoting bearing for coupling drawbars, preferably on railbound vehicles, said pivoting bearing connecting the drawbar which is equipped with coupling means and spring and/or damper means adapted to absorb tension and impact loads, to the vehicle and transmitting pressure and tension loads acting between the vehicle and the drawbar, while simultaneously allowing limited pendulum movement in the vertical direction of the drawbar, in addition to pivotal movement of said drawbar about a pin extending vertically through said pivoting bearing. Such an arrangement is known from DE—B—1 038 592.

It is the object of this invention to provide a resilient pivoting bearing allowing both pivotal movement about said vertical pin and a certain limited pendulum movement about a horizontal axis located transversely of the directions of the tension and impact loads.

Another object is to provide a resilient pivoting bearing which is so designed that it retains its connecting function even if, contrary to expectation, the resilient means should be rendered inoperative or be destroyed.

A further object is to provide a resilient pivoting bearing which can be readily combined with a number of different existing units absorbing impact and tension loads.

The arrangement according to the invention is substantially characterised in that there are provided, as seen in the direction of said vertical pin, between parts of the pivoting bearing which are rigidly connected to the vehicle and the drawbar in the directions of the pressure and tension loads, annular tension and impact absorbing members of resilient material located at a distance from one another and preferably concentric about the said pin, said annular members being clamped in such a manner between inclined surfaces or seats on an inner bearing part accommodating said pin and an outer bearing part that the drawbar, when unactuated, is held essentially horizontally, and that there is provided at either one of the bearing parts connected to the vehicle and the drawbar, respectively, adjacent said annular members, a portion projecting in the direction of the tension and impact loads and adapted, upon a predetermined maximal compression of said annular members in the direction of the tension or impact load, to engage with an opposing portion for directly transmitting thereto and to the spring and/or damper means of said drawbar tension or impact loads of a magnitude exceeding the load absorbing capacity of said resilient annular members.

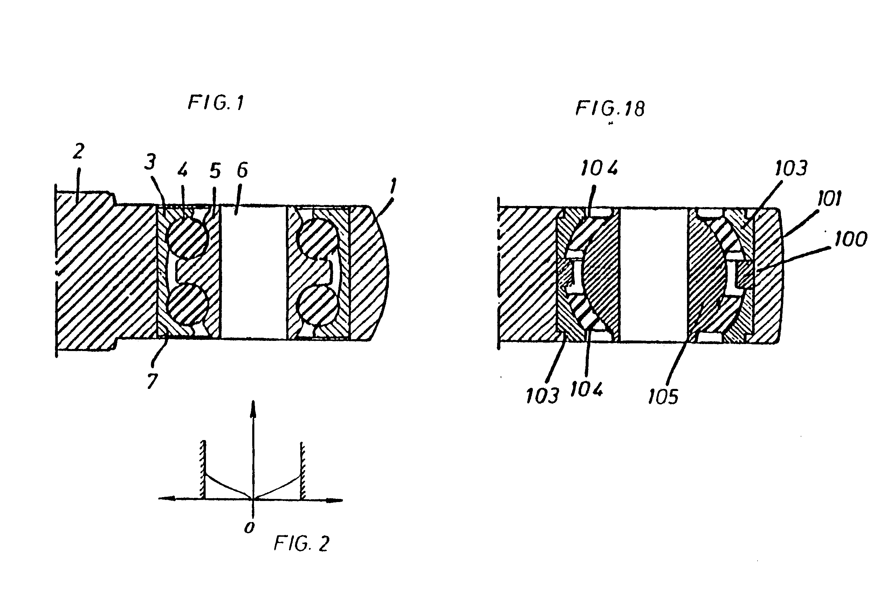

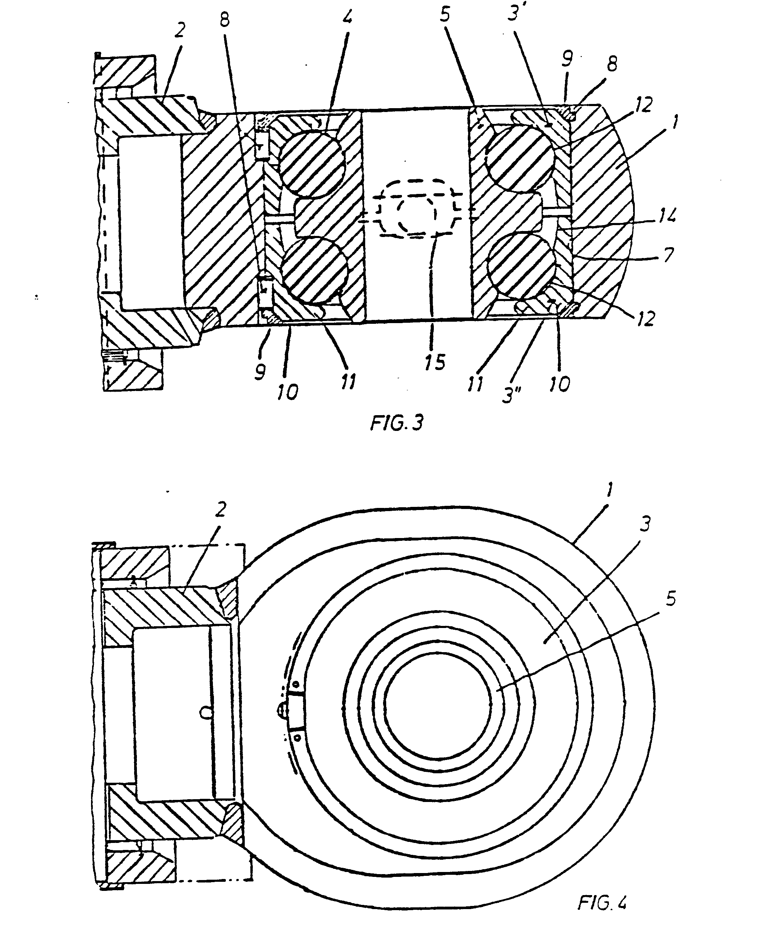

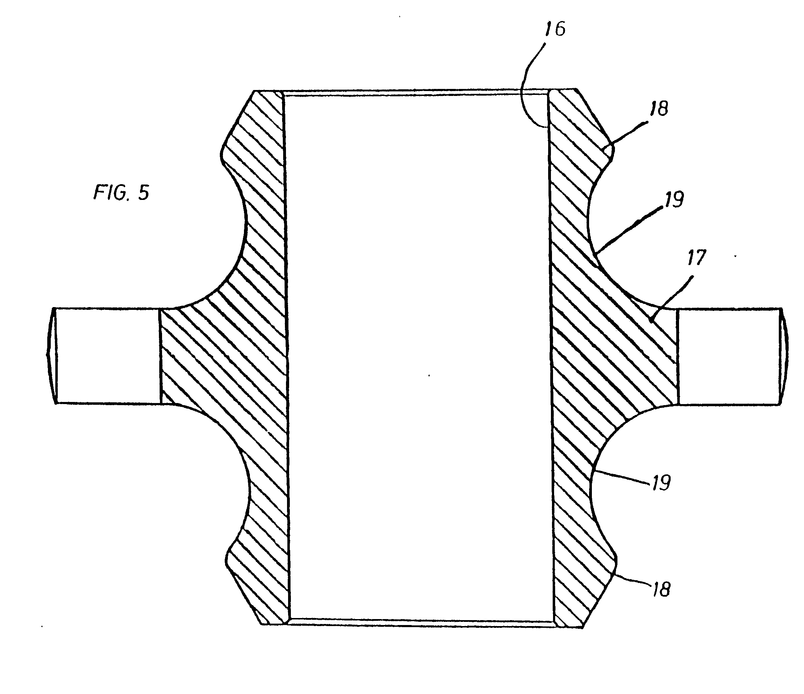

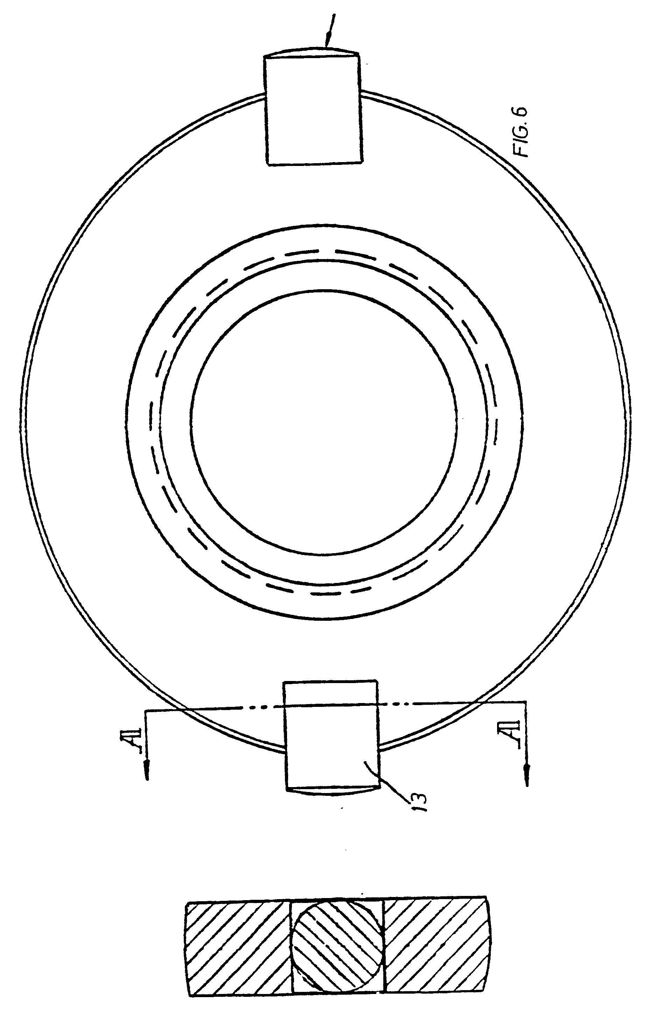

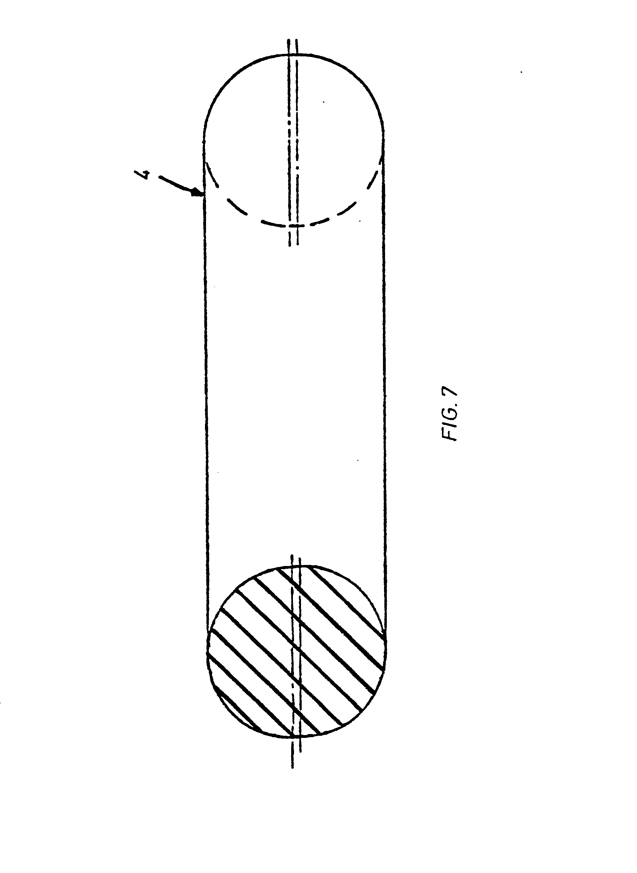

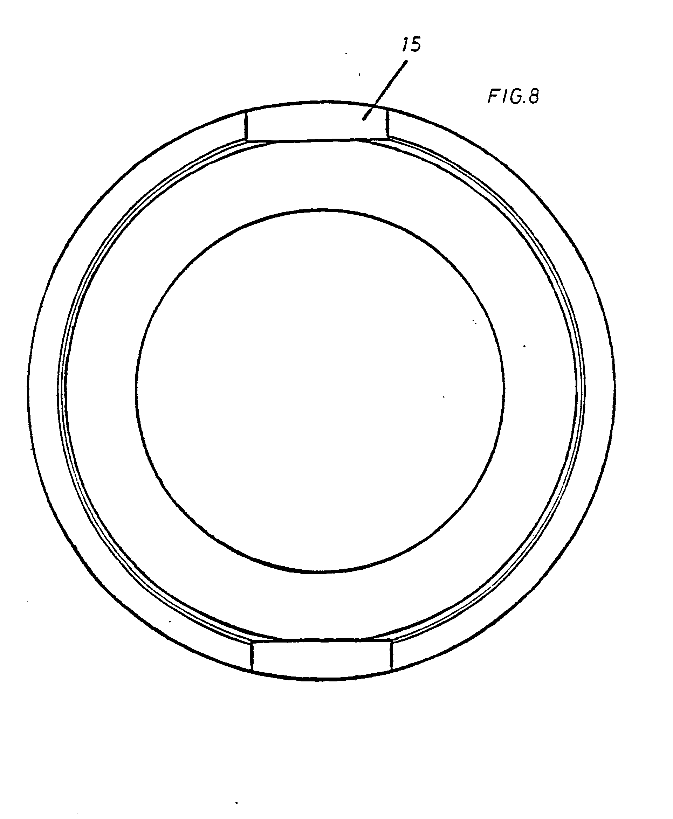

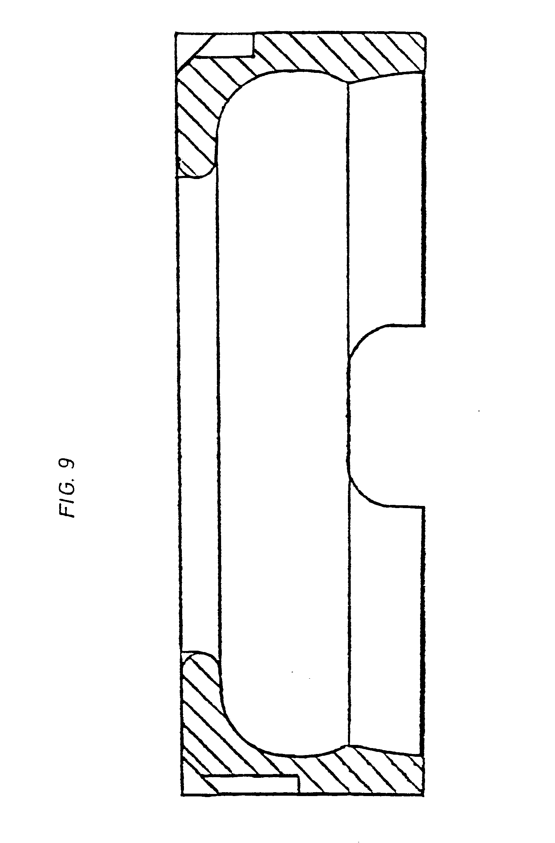

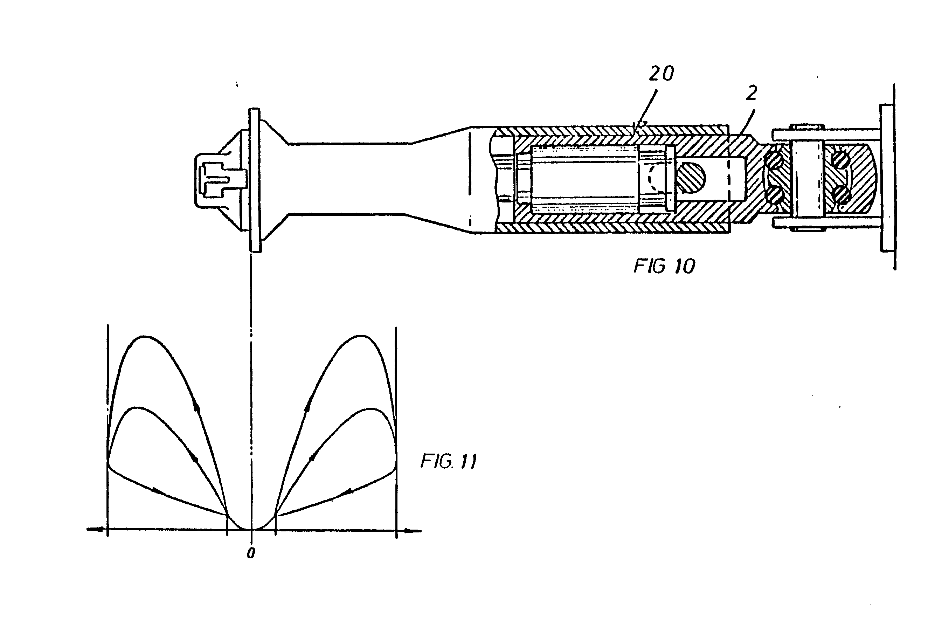

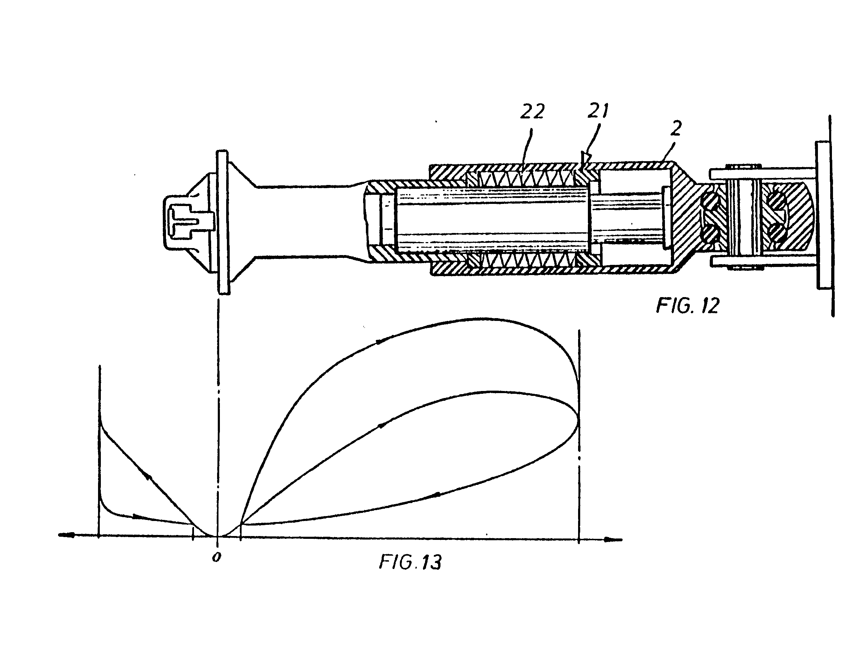

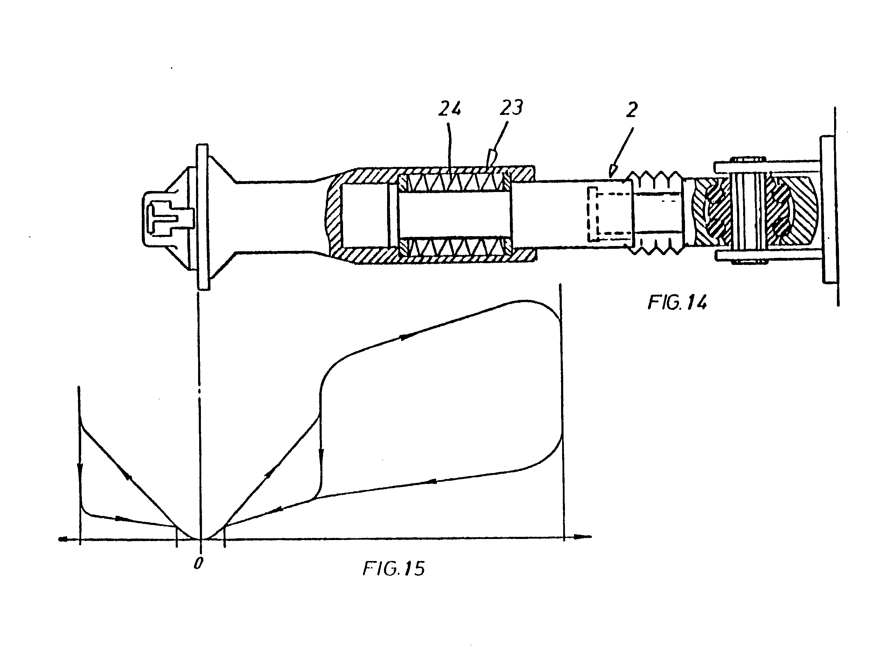

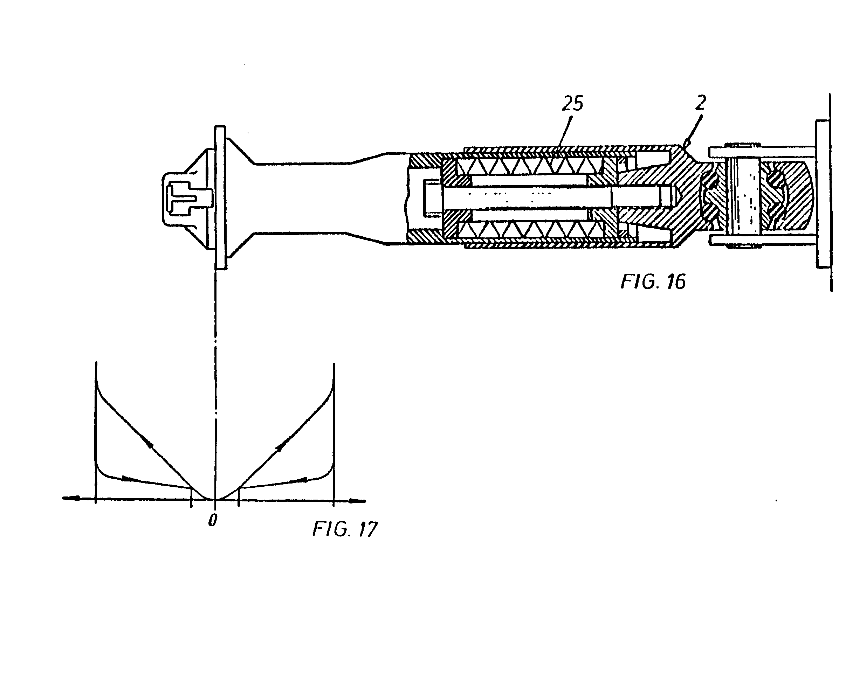

Embodiments of the arrangement according to the invention will be described in more detail below, reference being had to the accompanying drawings in which Fig. 1 is a vertical cross-section illustrating schematically a main embodiment and the resilient pivoting bearing provided according to the invention; Fig. 2 is an action diagram for the pivoting bearing; Fig. 3 is a vertical cross-section on a larger scale and in more detail of the same embodiment; Fig. 4 is a view of the pivoting bearing according to Fig. 3 as seen from above; Figs. 5 and 6 are vertical cross-sections, as seen from above, of the inner sleeve of the bearing; Fig. 7 is a view, partly in section, of one of the resilient annular members; Figs. 8 and 9 are views of one of the two essentially identical outer sleeves, seen from the centre plane of the bearing and in vertical section, respectively, Fig. 10 is a view, partly in vertical section, of a drawbar equipped with the pivoting bearing and a hydropneumatic double-acting damper; Fig. 11 is an action diagram for the same drawbar; Fig. 12 is a view of a drawbar equipped with a hydropneumatic damper and a buffer spring; Fig. 13 is an action diagram for this drawbar; Fig. 14 is a view of a drawbar equipped with double buffer springs and a hydraulic damper; Fig. 15 is an action diagram therefor; Fig. 16 is a view of a drawbar equipped with a resilient pivoting bearing and a double-acting buffer spring; Fig. 17 is an action diagram for this drawbar; and Fig. 18 is a schematic view, in vertical section, of an alternative embodiment of the resilient pivoting bearing.

The resilient pivoting bearing according to the present invention, which is adapted to transmit tension and pressure loads between two vehicles, comprises a bearing housing 1 rigidly connected with the drawbar 2 and one of said vehicles, outer sleeves 3 provided in said bearing housing, resilient annular members 4 provided between said outer sleeves 3 and an inner sleeve 5 which has a central opening 6 for receiving a bearing pin (not shown) connected to the other vehicle in some suitable manner.

The bearing housing 1 rigidly connected to the drawbar 2 has an essentially cylindrical through opening 7 provided at its upper and lower ends with grooves 8 for locking rings 9.

The outer sleeves 3, of which there is one upper sleeve 3' and one lower sleeve 3'', have an essentially cylindrical outer side and are provided in their outer edges with grooves 10 for the said locking rings 9.

On their inner side, the outer sleeves 3 are provided, at the end which is facing outwardly as seen in the axial direction, with a radially inwardly extending collar or flange 11 from which extends an inwardly circularly curved surface 12 adapted to form a seat for one of the resilient members. The curved surface 12 merges with a surface 14 slightly curved towards the inner edge of the respective outer sleeve. U-shaped recesses 15 for supporting pins 13 at the inner sleeve 5 are formed at two radially opposed points on the inner edge of the outer sleeve.

When the outer sleeves are mounted in the bearing housing 1, the seats 13 will be located at an axial distance from one another, and the recesses 15 will together define two opposed radial openings.

In the embodiment illustrated in Figs. 1—17, the resilient annular members 4 are in the form of two toroidal rings of suitable rubber material.

The inner sleeve 5 has an internal cylindrical opening 16 adapted to receive the bearing pin. On its outer side, the inner sleeve has a central ridge 17 and at either end a ridge 18 of smaller radial extent. Between the central ridge 17 from which the diametrically opposed pins 13 project, and each of the two end ridges, there is provided a circularly curved circumferential surface 19. Both surfaces form, like the surfaces 12 of the outer sleeves 3, seats for the resilient annular members 4.

The diameter across the central ridge 17 is larger than the diameter in the end openings at the inwardly facing collars or flanges 11 of the outer sleeves so that the inner sleeve 5 cannot be moved out of the outer sleeves, even if the resilient members should be destroyed. Furthermore, the inner sleeve cannot be rotated relative to the outer sleeve because of the engagement of the pins 13 with the recesses 15.

Upon mounting of the pivoting bearing, the outer sleeves 3 are compressed in the opening 7 of the bearing houses from either side towards the inner sleeve 5 with the resilient annular members 4, such that these members will be inserted in seats, at 12 and 19, on the outer sleeves 3 and the inner sleeve 5 so that the annular members will obtain a predetermined pretension. The outer sleeves 3 are fixed by means of the locking rings 9 in the intended position.

The ridge 17 also serves to form a stop against maximal displacement. When the pivoting bearing is subjected to a tension or impact load exceeding the load which the resilient rings can absorb, the ridge 17 will engage the opposing portion of the outer sleeve 3, whereby a rigid connection is established between the pin through the pivoting bearing and the drawbar and whereby such excessible loads will be absorbed by a spring and/ or damper means mounted on the drawbar and described below.

This arrangement has been made to prevent the resilient rings from being subjected to excessive loads that may damage the resilient material. As is well known, resilient materials can be compressed and extended to a certain limit only, and loads beyond this limit may cause lasting damage. By relieving the resilient rings from loads in excess of a predetermined magnitude, the risk of such damage is eliminated.

As will appear from Fig. 2, the pivoting bearing is capable of absorbing, on the one hand, radial movements up to a certain limit, during which the spring force increases with the magnitude of the displacement movement, and on the other hand tilting movements during which the annular members are subjected to shear.

In the embodiment illustrated in Fig. 10, the drawbar 2 connected to the pivoting bearing is provided with a double-acting hydropneumatic damper 20 which, as will appear from Fig. 11, increases the ability to absorb both impacts and jerks.

In the embodiment shown in Fig. 12, the drawbar 2 is provided with a single-acting hydropneumatic damper 21 and a buffer spring 22 for absorbing tension loads. The characteristics of the damper and the spring, combined with the characteristic of the pivoting bearing, are shown in Fig. 13.

In the embodiment shown in Fig. 14, the drawbar 2 is provided with hydraulic damper 23 supplemented with a double-acting buffer spring 23, whereby the characteristics shown in Fig. 15 are obtained.

In the embodiment shown in Fig. 16, the drawbar 2 is provided with a double-acting buffer spring 25 only, the effect of which, combined with that of the resilient pivoting bearing, is shown in Fig. 17.

As will appear from Fig. 18, the pivoting bearing itself may be designed in an alternative manner.

Instead of outer and inner sleeves with seats for annular resilient members, use is made of an essentially spherical inner sleeve 105 and outer sleeves 103 clamped in the opening of the bearing housing 101 and separated by a spacer ring 100, the resilient members 104 being annular bodies made of suitable rubber material and vulcanised to the inner sleeve 105 and the inwardly facing, substantially spherical surfaces of the outer sleeves 103.

The spacer ring 100 which projects into the free space between the bearing housing 101 and the inner sleeve 105, serves the same purpose as the ridge 17 previously mentioned, i.e. to restrict the displacement between the inner sleeve and the bearing housing so that excessive loads on the annular members are prevented. In the embodiment shown in Fig. 18, the inner sleeve 105, upon such displacement, thus will engage the ring 100, whereby a rigid connection is established between the pin through the inner sleeve and the drawbar, and the spring and/or damper means will absorb the loads in excess.

Also in this case, the maximum area of the inner sleeve is such that the inner sleeve cannot be pushed out of the outer sleeves.

The invention is not restricted to the embodiments described above and shown in the drawings, but may be modified in several ways within the scope of the appended claims.

## Claims

1. An arrangement in a pivoting bearing for coupling drawbars (2), preferably on railbound vehicles, said pivoting bearing connecting the drawbar (2) which is equipped with coupling means and spring and/or damper means adapted to absorb tension and impact loads, to the vehicle and transmitting pressure and tension loads acting between the vehicle and the drawbar, while simultaneously allowing limited pendulum movement in the vertical direction of the drawbar, in addition to pivotal movement of said drawbar about a pin extending vertically through said pivoting bearing, characterised in that there are provided, as seen in the direction of said vertical pin, between parts (3, 5) of the pivoting bearing which are rigidly connected to the vehicle and the drawbar in the directions of the pressure and tension loads, annular tension and impact absorbing members (4) of resilient material located at a distance from one another and preferably concentric about the said pin, said annular members being clamped in such a manner between inclined surfaces or seats (12, 19) on an inner bearing part (5) accommodating said pin and an outer bearing part (3) that the drawbar, when unactuated, is held essentially horizontally, and that there is provided at either one of the bearing parts (3, 5) connected to the vehicle and the drawbar, respectively, adjacent said annular members (4), a portion (17, 100) projecting in the direction of the tension and impact loads and adapted, upon a predetermined maximal compression of said annular members in the direction of the tension or impact load, to engage with an opposing portion for directly transmitting thereto and to the spring and/or damper means of said drawbar tension or impact loads of a magnitude exceeding the load absorbing capacity of said resilient annular members.

2. An arrangement as claimed in claim 1, characterised in that the outer coupling part comprises two sleeve-shaped halves (3) mounted in a bearing housing (1) with a cylindrical opening (7) and having, at their ends facing away from one another, an inwardly turned flange (11) or the like defining on its inner side, as seen in the axial direction, a seat (12) of a shape adapted to a portion of the outer side of the annular resilient member, that the inner coupling part has a central opening adapted to receive a pivoting bearing pin and provided on its outer side with two circumferential seats (19) axially spaced apart by a circumferential ridge (17) serving as a stop against maximum displacement, said

**Patentansprüche**

1. Vorrichtung bei Gelenklager für Zustangen (2), vorzugsweise bei Schienenfahrzeugen, wobei das Gelenklager die mit Kupplungsvorrichtung und Feder und/oder Dämpfer zur Aufnahme von Zug- und Stossbeanspruchungen versehene Zugstange (2) mit dem Fahrzeug verbindet, Druck- und Zugbeanspruchungen zwischen dem Fahrzeug und der Zugstange überführt und gleichzeitig eine begrenzte Pendelbewegung in Vertikalrichtung der Zugstange neben Auslenkbewegungen der Zugstange um einen sich senkrecht durch das genannte Gelenklager streckenden Zapfen gestattet, dadurch gekennzeichnet, dass, in Richtung des genannten vertikalen Zapfens gesehen, zwischen starr mit dem Fahrzeug und der Zugstange in Richtung der Druck- und Zugkräfte verbundenen Teilen (3, 5) des Gelenklagers ringförmige zug- und stossabsorbierende Elemente (4) aus elastischen Material in gegenseitigem Abstand und vorzugsweise konzentrisch um den genannten Zapfen herum vorgesehen sind, die derart zwischen schräggestellten Flächen oder Sitzen (12, 19) auf einem inneren an den genannten Zapfen angepassten Lagerteil (5) und einem äusseren Lagerteil (3) eingespannt sind, dass die Zugstange in nicht beaufschlagter Stellung im wesentlichen horizontal gehalten wird, und dass an einem der jeweils mit dem Fahrzeug bzw. der Zugstange verbundenen Lagerteile (3, 5) im Bereich der ringförmigen Elemente (4) ein in Richtung der Zugkraft- und Stossbeanspruchung vorstehender Abschnitt (17, 100) vorgesehen ist, der dazu dient, bei einer vorgegebenen maximalen Kompression der ringförmigen Elemente in Richtung der Zugkraft- oder Stossbeaufschlagung, in Eingriff mit einem gegenüberliegenden Abschnitt zur direktion Uebertragung an denselben und and die Feder und/oder Dämpferelemente der Zugstange zu kommen, um Zugspannungen oder Stosskräfte zu übertragen, die die Kraftaufnahmefähigkeit der elastischen ringförmigen Elemente überschreiten.

2. Vorrichtung nach Anspruch 1, dadurch gekennzeichnet, dass das äussere Kupplungsteil zwei hülsenförmige, in einer zylindrischen Öffnung (7) in Lagergehäuse (1) angebrachte Hälften (3) aufweist, die an ihren einander abgewandten Enden jeweils einen nach inner zur Öffnung (7) gerichteten Flansch (11) o.dgl. aufweisen, der an seiner Innenseite — in Axialrichtung gesehen — einen Sitz (12) solcher Form aufweist, die auf einen Abschnitt der Aussenseite des ringförmigen elastischen Elements abgestimmt ist, dass das innere Kupplungsteil ein mittige, für einen Gelenklagerzapfen vorgesehene Öffnung aufweist und an seiner Aussenseite mit zwei Lagersitzen (19) versehen ist, die durch einen radial verlaufenden Kragen (17) voneinander getrennt sind, der zur Begrenzung der maximalen Verlagerung dient, wobei die Sitze (19) auch eine an die Aussenseite der ringförmigen Elemente angepasste Form aufweisen, und dass die freien durch die nach innen gerichteten Flansche (11) gebildeten Öffnungen des äusseren Kupplungsteiles eine Erstreckung oder Fläche haben, die geringer als jene des inneren Kupplungsteiles an dessen Rundkragen (17) ist.

3. Vorrichtung nach Anspruch 1, dadurch gekennzeichnet, dass das äussere Lagerteil eine nach oben und nach unten offene Ausnehmung aufweist, deren Innenseite sphärisch gewölbt ist, dass das innere Lagerteil eine sphärisch gewölbte Aussenseite aufweist, dass die elastischen Ringelemente durch Vulkanisation o.dgl. sowohl am äusseren als auch inneren Lagerteil in einem Abstand von der Horizontalmittelebene durch das Lager befestigt sind, und dass der Aussendurchmesser des inneren Lagerteils grösser als die Endöffnungen des äusseren Lagerteils ist.

**Revendications**

1. Joint pivotant pour barres d'attelage (2), de préférence pour des barres d'attelage de véhicules ferroviaires, ledit joint pivotant reliant au véhicule la barre d'attelage (2), qui est équipée de moyens d'accrochage et de moyens du type ressorts et/ou amortisseurs, adaptés pour absorber les contraintes de traction et de choc et transmettant les contraintes de compression et de traction qui s'exercent entre le véhicule et la barre d'attelage, tout en permettant en même temps un mouvement d'oscillation limité de la barre d'attelage dans le plan vertical, en supplément du mouvement de pivotement de la barre d'attelage autour d'une broche qui traverse verticalement ledit joint pivotant, caractérisé en ce qu'il comprend, vu dans la direction de ladite broche verticale, entre des éléments (3, 5) du joint pivotant qui sont rigidement solidaires du véhicule et de la barre d'attelage dans les directions des contraintes de compression et de traction, des éléments annulaires (4) absorbant les tractions et les chocs, faits d'une matière élastique, placés à une certaine distance l'un de l'autre et, de préférence, concentriquement autour de ladite broche, lesdits éléments annulaires étant serrés entre des surfaces ou portées inclinées (12, 19) prévues sur une partie intérieure (5) du joint, qui reçoit ladite broche, et sur une partie extérieure (3) du joint, de telle manière que, lorsqu'elle est inactive, la barre d'attelage soit maintenue sensiblement horizontalement et en ce qu'il est prévu, sur l'une ou l'autre des parties (3, 5) du joint qui sont solidaires, l'une du véhicule, l'autre de la barre d'attelage, à promimité desdits éléments annulaires (4), une partie (17, 100) qui fait saillie dans la direction des contraintes de traction et de choc et qui est adaptée pour entrer en contact avec une partie qui lui est opposée face à face, en réponse à une compression maximum prédéterminée desdits éléments annulaires dans la direction de la contrainte de traction ou de choc, pour transmettre directement à cette partie opposée ainsi qu'aux moyens du type resorts et/ou amortisseurs de ladite barre d'attelage, des contraintes de traction ou de choc d'une valeur qui excède la capacité d'absorption des contraintes desdits éléments annularies élastiques.

2. Joint pivotant selon la revendication 1, caractérisé en ce que la partie extérieure du joint comprend deux moitiés 3 en forme de douille, montées dans un boîtier de joint (1) qui présente une ouverture cylindrique (7), et ces moitiés présentant, à leurs extrémités qui sont l'une à l'opposé de l'autre, une collerette (11) ou équivalent, rabattue vers l'intérieur, qui définit, sur sa face intérieure, dans la direction axiale, une portée (12) adaptée à une partie de la surface extérieure de l'élément élastique annulaire, en ce que la partie intérieure du joint possède une ouverture centrale adaptée pour recevoir une broche de joint pivotant et est munie sur sa face extérieure de deux portées circonférentielles (19) espacées axialement l'une de l'autre par une nervure circonférentielle (17) qui sert de butée pour limiter le déplacement maximum, lesdites portées ayant en outre une forme adaptée à la face extérieure dudit élément annulaire, et en ce que les ouvertures libres définies par les collerettes (11) de l'autre partie du joint qui sont rabattues vers l'intérieur, sont d'une dimension ou surface inférieure à celle de la partie intérieure du joint, mesurée au droit de sa nervure circonférentielle (17).

3. Joint pivotant selon la revendication 1, caractérisé en ce que la partie extérieure du joint présente une cavité qui s'ouvre vers le haut et vers le bas, la face intérieure de cette cavité étant incurvée avec une forme sphérique, en ce que la partie intérieure du joint possède une surface extérieure incurvée avec une forme sphérique, en ce que les éléments annulaires élastiques sont fixés, par vulcanisation ou équivalent, à la fois à la partie extérieure du joint et à la partie intérieure du joint, à une distance du plan central horizontal qui traverse le joint, et en ce que le diamètre de la partie intérieure du joint est plus grand que les ouvertures d'extrémités de la partie extérieure du joint.

FIG.18

103
101
100

105

104

104

103 104

103

FIG.1

1

3 4 5 6

7

2

FIG.2

O

0 185 728

FIG. 3

FIG. 4

2

FIG. 5

18

19

17

16

19

18

0 185 728

FIG.6

13

A

A

4

FIG. 7

FIG.8

15

FIG. 9

FIG 10

FIG. 11

FIG. 12

FIG.13

FIG.14

2

23

24

FIG.15

0

FIG. 16

FIG. 17

25

2

0 185 728